# EUROPEAN PATENT SPECIFICATION

(11) **EP 4 282 988 B1**
(45) Date of publication and mention of the grant of the patent: **19.11.2025**
(21) Application number: 22763122.3
(22) Date of filing: 25.02.2022
(51) Int. Cl.: C21B 5/00, C21B 7/24, F27D 21/00, G06Q 10/063, G06Q 50/04, F27B 1/28, F27D 19/00

(54) **BLAST FURNACE ABNORMALITY DETERMINATION DEVICE, METHOD AND DATA CARRIER ASSOCIATED**
VORRICHTUNG, VERFAHREN UND DATENTRÄGER ZUGEORDNET ZUR BESTIMMUNG EINER HOCHOFENABNORMALITÄT
DISPOSITIF DE DÉTERMINATION D'ANOMALIE DE HAUT FOURNEAU, PROCÉDÉ ET SUPPORT DE DONNÉES ASSOCIÉS

(30) Priority: 01.03.2021 JP 2021031414
(43) Date of publication of application: 29.11.2023
(73) Proprietor: JFE Steel Corporation, Tokyo 100-0011 (JP)
(72) Inventor: SHIMAMOTO, Hiroyuki, Tokyo 100-0011 (JP); ITO, Tomohiko, Tokyo 100-0011 (JP)
(74) Representative: Hoffmann Eitle
(86) International application number: PCT/JP2022/007838
(87) International publication number: WO 2022/186066

(56) References cited:
- JP-A- 2018 165 399
- JP-A- 2020 503 449
- JP-A- H0 625 718
- JP-B2- 6 617 767
- JP-B2- 6 690 081
- US-A- 4 976 780

## Description

### Field

The present invention relates to a blast furnace abnormality determination device, a blast furnace abnormality determination method, a blast furnace operation method, a data carrier with a program of the abnormality determination server device stored thereon, and a data carrier with a program of the display terminal device thereon.

### Background

In recent operation conditions of a low coke ratio and a high pulverized coal ratio in a blast furnace, it is very important to detect abnormality of the blast furnace early and accurately in order to maintain stable operation. From such a background, Patent Literature 1 proposes a method of determining an open ceiling of a blast furnace by unifying an abnormality of a ventilation state in a furnace appearing in a shaft pressure using principal component analysis. On the other hand, since the blast furnace has a cylindrical shape, when a deviation in a circumferential direction occurs in a raw material charging state or a reaction state, there is a case where an abnormality such as deterioration of an operational state due to a variation in the circumferential direction of a tapping state occurs. For this reason, Patent Literature 2 proposes a method of detecting a deviation in the circumferential direction of the raw material charging state or the reaction state based on a principal component analysis value obtained by performing principal component analysis on a temperature distribution immediately above a raw material charging surface.

### Citation List

### Patent Literature

Patent Literature 1: JP 6686947 B2
Patent Literature 2: JP 6617767 B2

### Non Patent Literature

Non Patent Literature 1: Kano Manabu, Multivariate statistical process control (MSPC), [searched on February 19, 2021], Internet <URL:http://manabukano.brilliant-future.net/lecture/dataanalysis/doc08_MSPC.pdf>
US 4 976 780 A discloses a method for management of an operation of a blast furnace comprising the steps of: preparing a data base including information related to said blast furnace and a knowledge base including rules for diagnosing the state of said blast furnace, gathering said information in a first interval, renewing said data base by using said gathered information, and inferring the state of said blast furnace using said data base and said knowledge base in a second interval longer than said first interval, characterized in that the method further comprises the steps of: watching parameters related to said blast furnace to detect a remarkable change in the parameters, and additionally initiating said inference step when a remarkable change in the parameters is detected in said watching step. JP 6 690081 B2 discloses a prediction system for a blowing-through scale in a blast furnace provided at a blast furnace producing a pig iron, and also performing prediction regarding troubles generated at the blast furnace. The prediction system includes: a display capable of confirming by an operator; and a prediction part performing prediction regarding blowing-through as one of the trouble in the blast furnace. The prediction part performs the prediction of the scale of the blowing-through when the blowing-through is generated in the present operation conditions, and further calculates the risk of generating the blowing-through, and the display displays the scale of the blowing-through predicted in the prediction part and the risk of generating the blowing-through.

### Summary

### Technical Problem

However, according to the method described in Patent Literature 1, since a sensor for measuring the shaft pressure is installed on a surface of the furnace body, it is possible to detect an abnormality in which a gas flow in an outer peripheral portion in the furnace changes, but it is difficult to detect an abnormality in which the gas flow in the outer peripheral portion in the furnace does not change significantly at an early stage. For example, in a case where an abnormality occurs in a radial central portion of the blast furnace, the abnormality cannot be detected until the abnormality spreads to an outer peripheral portion in the furnace, and there is a possibility that the damage of the blast furnace abnormality increases. On the other hand, in the method described in Patent Literature 2, the temperature distribution immediately above the raw material charging surface may change even when the operation in which no abnormality occurs in the blast furnace is relatively stable, and thus there is a possibility that the abnormality of the blast furnace is erroneously detected.

The present invention has been made in view of the above problems, and an object of the present invention is to provide a blast furnace abnormality determination device, a blast furnace abnormality determination method, a blast furnace abnormality determination system, an abnormality determination server device, a display terminal device, a data carrier storing a program of the abnormality determination server device, and a data carrier storing a program of the display terminal device capable of early and accurately detecting an abnormality of a blast furnace. Furthermore, another object of the present invention is to provide a blast furnace operation method capable of stably operating a blast furnace by detecting an abnormality of the blast furnace at an early stage and with high accuracy. Solution to Problem

A blast furnace abnormality determination device according to the present invention is defined by claim 1. It includes: a temperature distribution measurement unit configured to measure a temperature distribution immediately above a raw material charging surface in a blast furnace; a gas component analysis unit configured to analyze a component of a gas in the blast furnace; a data accumulation unit configured to accumulate information on the temperature distribution measured by the temperature distribution measurement unit and an analysis result of the gas component analysis unit; a temperature distribution statistic calculation unit configured to calculate a statistic for determining whether or not the temperature distribution measured by the temperature distribution measurement unit is normal based on a result obtained by performing principal component analysis on the information of the temperature distribution of the blast furnace in a normal state accumulated in the data accumulation unit; and an abnormality determination unit configured to determine whether or not an abnormality has occurred in the blast furnace by evaluating the statistic calculated by the temperature distribution statistic calculation unit and the analysis result of the gas component analysis unit in association with each other. The analysis result of the gas component analysis unit includes information regarding a gas utilization rate.

Dependent claim 2 relates to preferred embodiments. The analysis result of the gas component analysis unit may include information regarding a concentration of the gas in the furnace.

The abnormality determination unit may be configured to determine whether or not an abnormality has occurred in the blast furnace by statistically evaluating interlocked changes and amounts of changes in the Q statistic calculated by the temperature distribution statistic calculation unit and the gas utilization rate.

A blast furnace abnormality determination method according to the present invention is defined by claim 3. It includes: a temperature distribution measurement step of measuring a temperature distribution immediately above a raw material charging surface in a blast furnace; a gas component analysis step of analyzing a component of a gas in the blast furnace; a data accumulation step of accumulating information on the temperature distribution measured in the temperature distribution measurement step and an analysis result in the gas component analysis step; a temperature distribution statistic calculation step of calculating a statistic for determining whether or not the temperature distribution measured in the temperature distribution measurement step is normal based on a result obtained by performing principal component analysis on the information of the temperature distribution of the blast furnace in a normal state accumulated in the data accumulation step; and an abnormality determination step of determining whether or not an abnormality has occurred in the blast furnace by evaluating the statistic calculated in the temperature distribution statistic calculation step and the analysis result in the gas component analysis step in association with each other. The analysis result in the gas component analysis step includes information regarding a gas utilization rate.

Dependent claim 4 relates to preferred embodiments. The analysis result in the gas component analysis step may include information regarding a concentration of the gas in the furnace.

The abnormality determination step may include a step of determining whether or not an abnormality has occurred in the blast furnace by statistically evaluating interlocked changes and amounts of changes in the Q statistic calculated in the temperature distribution statistic calculation step and the gas utilization rate.

A blast furnace operation method according to the present invention is defined by claim 5. It includes a step of operating a blast furnace using the blast furnace abnormality determination device.

The present disclosure also relates to a blast furnace abnormality determination system. It includes: an abnormality determination server device configured to acquire operation data of a blast furnace, and determine an abnormality of the blast furnace; a data collection device configured to acquire and accumulate observation data of the blast furnace from a sensor and an analyzer installed in the blast furnace; and a display terminal device configured to acquire and display abnormality determination information from the abnormality determination server device, wherein the abnormality determination server device includes: a first data acquisition unit configured to acquire, from the data collection device, at least temperature distribution data immediately above a raw material charging surface in the blast furnace and gas analysis information obtained by analyzing a component of a gas in the blast furnace; a temperature distribution statistic calculation unit configured to calculate a statistic for determining whether or not the temperature distribution data acquired by the first data acquisition unit is normal based on a result obtained by performing principal component analysis on the temperature distribution data of the blast furnace in a normal state accumulated in the data collection device; an abnormality determination unit configured to determine whether or not an abnormality has occurred in the blast furnace by evaluating the statistic calculated by the temperature distribution statistic calculation unit and the gas analysis information in association with each other; and a determination data transmission unit configured to transmit abnormality determination information including data used for determination in the abnormality determination unit and a determination result, the data collection device includes: a second data acquisition unit configured to acquire at least temperature distribution data immediately above the raw material charging surface in the blast furnace and gas analysis information obtained by analyzing a component of the gas in the blast furnace; a data accumulation unit configured to store information acquired by the second data acquisition unit; and a data transmission unit configured to transmit data requested in response to requests from the abnormality determination server device and the display terminal device, and the display terminal device includes: an abnormality determination information acquisition unit configured to acquire the abnormality determination information from the abnormality determination server device; and a display unit configured to display information acquired by the abnormality determination information acquisition unit.

The present disclosure also relates to an abnormality determination server device. It constructs a blast furnace abnormality determination system together with a data collection device for acquiring and accumulating observation data from a sensor and an analyzer installed in a blast furnace and a display terminal device for acquiring and displaying abnormality determination information from the abnormality determination server device, and includes: a first data acquisition unit configured to acquire, from the data collection device, at least temperature distribution data immediately above a raw material charging surface in the blast furnace and gas analysis information obtained by analyzing a component of a gas in the blast furnace; a temperature distribution statistic calculation unit configured to calculate a statistic for determining whether or not the temperature distribution data acquired by the first data acquisition unit is normal based on a result obtained by performing principal component analysis on the temperature distribution data of the blast furnace in a normal state accumulated in the data collection device; an abnormality determination unit configured to determine whether or not an abnormality has occurred in the blast furnace by evaluating the statistic calculated by the temperature distribution statistic calculation unit and the gas analysis information in association with each other; and a determination data transmission unit configured to transmit abnormality determination information including data used for determination in the abnormality determination unit and a determination result.

The present disclosure also relates to a display terminal device. It acquires and displays information related to an abnormality of a blast furnace from an abnormality determination server device for acquiring operation data of the blast furnace and determining whether or not an abnormality has occurred in the blast furnace, and includes: an abnormality determination information acquisition unit configured to acquire, from the abnormality determination server device, abnormality determination information including data used for determining whether or not an abnormality has occurred in the blast furnace and a determination result by evaluating a statistic for determining whether or not temperature distribution data immediately above a raw material charging surface in the blast furnace is normal in association with gas analysis information obtained by analyzing a component of a gas in the blast furnace; and a display unit configured to display information acquired by the abnormality determination information acquisition unit.

A data carrier storing a program according to the present invention for an abnormality determination server device for constructing a blast furnace abnormality determination system together with a data collection device for acquiring and accumulating observation data from a sensor and an analyzer installed in a blast furnace and a display terminal device for acquiring and displaying abnormality determination information from the abnormality determination server device, causes a computer to function as: a first data acquisition unit configured to acquire, from the data collection device, at least temperature distribution data immediately above a raw material charging surface in the blast furnace and gas analysis information obtained by analyzing a component of a gas in the blast furnace; a temperature distribution statistic calculation unit configured to calculate a statistic for determining whether or not the temperature distribution data acquired by the first data acquisition unit is normal based on a result obtained by performing principal component analysis on the temperature distribution data of the blast furnace in a normal state accumulated in the data collection device; an abnormality determination unit configured to determine whether or not an abnormality has occurred in the blast furnace by evaluating the statistic calculated by the temperature distribution statistic calculation unit and the gas analysis information in association with each other; and a determination data transmission unit configured to transmit abnormality determination information including data used for determination in the abnormality determination unit and a determination result.

A data carrier storing a program according to the present invention for a display terminal device for acquiring and displaying information related to an abnormality of a blast furnace from an abnormality determination server device for acquiring operation data of the blast furnace and determining whether or not an abnormality has occurred in the blast furnace, causes a computer to function as: an abnormality determination information acquisition unit configured to acquire, from the abnormality determination server device, abnormality determination information including data used for determining whether or not an abnormality has occurred in the blast furnace and a determination result by evaluating a statistic for determining whether or not temperature distribution data immediately above a raw material charging surface in the blast furnace is normal in association with gas analysis information obtained by analyzing a component of a gas in the blast furnace; and a display unit configured to display information acquired by the abnormality determination information acquisition unit.

### Advantageous Effects of Invention

According to the blast furnace abnormality determination device, the blast furnace abnormality determination method, the data carrier storing a program of the abnormality determination server device, and the data carrier storing a program of the display terminal device according to the present invention, the abnormality of the blast furnace can be detected early and accurately. Furthermore, according to the blast furnace operation method according to the present invention, it is possible to stably operate the blast furnace by detecting an abnormality of the blast furnace at an early stage and with high accuracy.

### Brief Description of Drawings

FIG. 1 is a block diagram illustrating a configuration of an abnormality determination device for a blast furnace according to an embodiment of the present invention.
FIG. 2 is a diagram illustrating temperature measurement points in Examples.
FIG. 3 is a diagram illustrating an example of time changes of a temperature and a Q statistic immediately above a raw material charging surface when an abnormality occurs.
FIG. 4 is a diagram illustrating a time change in gas utilization rate in the same time zone as the time zone of FIG. 3.
FIG. 5 is a diagram illustrating an example of time changes of a Q statistic and a gas utilization rate at the time of stable operation.
FIG. 6 is a block diagram illustrating a configuration of a blast furnace abnormality determination system.

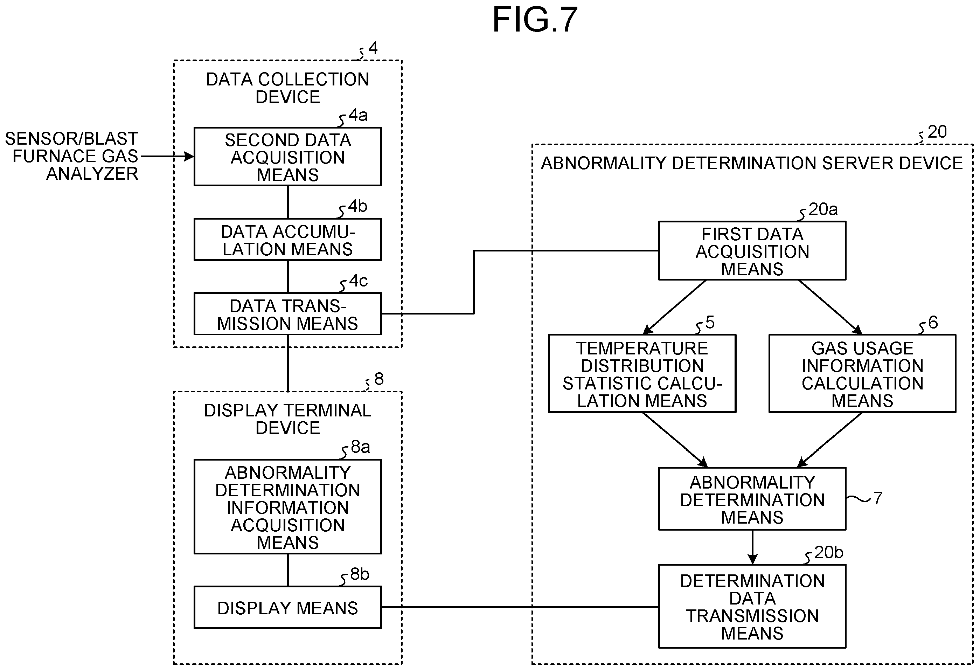

FIG. 7 is a functional block diagram of the blast furnace abnormality determination system illustrated in FIG. 6.

### Description of Embodiments

When an abnormality occurs in a blast furnace, particularly when an abnormality occurs in which a gas flow in the vicinity of a central part of the blast furnace where a change in shaft pressure hardly appears at the beginning of the occurrence increases, an increase or variation may occur in a temperature measurement value immediately above a raw material charging surface. This is because, due to the deterioration of a gas flow distribution from tuyeres of the blast furnace to an upper part of the blast furnace, a reaction such as reduction/heating of a raw material due to contact of the high-temperature gas blown from the tuyeres with the raw material is not normally performed, and the high-temperature gas rises as it is to the upper part of the blast furnace. Therefore, an abnormality of the blast furnace can be detected by unifying the local increase and variation of the temperature measurement value immediately above the raw material charging surface by principal component analysis.

On the other hand, the inventors of the present invention have found that a concentration of a gas in the blast furnace, specifically, a gas utilization rate (CO concentration/CO₂ concentration or CO₂ concentration/(CO concentration + CO₂ concentration)) changes when an abnormality occurs in which the gas flow in the vicinity of the central part of the blast furnace increases. The CO concentration and the CO₂ concentration used for the gas utilization rate calculation are measured by a gas concentration meter installed on a downstream side of a furnace top. Note that hereinafter, the gas utilization rate is defined as CO concentration/CO₂ concentration. In this definition, the higher the value, the lower the gas utilization rate. The central part of the blast furnace is charged with a lot of coke to ensure the air permeability of the blast furnace. Therefore, it is considered that the reason why the gas utilization rate changes is that as a result of a large amount of gas passing through the central part of the blast furnace where a charge amount of ore is small due to factors such as deterioration of the gas flow in a lower part of the blast furnace, the opportunity of contact between the gas and the ore is reduced, and an O₂ reduction amount of the ore is reduced. As a result, an abnormality of the blast furnace can be detected by monitoring the concentration of the gas in the blast furnace.

However, there are various disturbances in the operation of the blast furnace. Examples of the disturbance include variations in a distribution state of charged raw materials in a radial direction of the blast furnace. Therefore, only one of a principal component analysis result using a temperature measurement value immediately above the raw material charging surface and the gas concentration increases a risk of erroneously detecting the abnormality of the blast furnace. Therefore, the inventors of the present invention have determined to detect an abnormality of the blast furnace caused by a reaction such as reduction/temperature increase of the raw material in the blast furnace by evaluating the principal component analysis result using the temperature measurement value immediately above the raw material charging surface and the concentration of the gas in association with each other. Examples of the abnormality of the blast furnace to be detected include an abnormality in which a gas flow to the central part of the blast furnace having a larger amount of coke increases due to a change in charge distribution or the like. In that case, CO contributing to ore reduction decreases, and the gas utilization rate decreases. Furthermore, at this time, since the high-temperature air blown from the tuyeres passes through the central part of the blast furnace where the amount of coke is large and the ventilation resistance is small, the high-temperature air reaches the upper part of the furnace in a relatively high temperature state, and the gas temperature distribution in the upper part of the furnace is disturbed as compared with normal operation. In this method, an abnormality of the blast furnace can be detected earlier by simultaneously observing the gas utilization rate and the disturbance of the gas temperature distribution immediately above the blast furnace raw material as described above.

Hereinafter, an abnormality determination device, an abnormality determination method, and an operation method for a blast furnace according to an embodiment of the present invention, which have been conceived on the basis of the above-described technical idea, will be described with reference to the drawings.

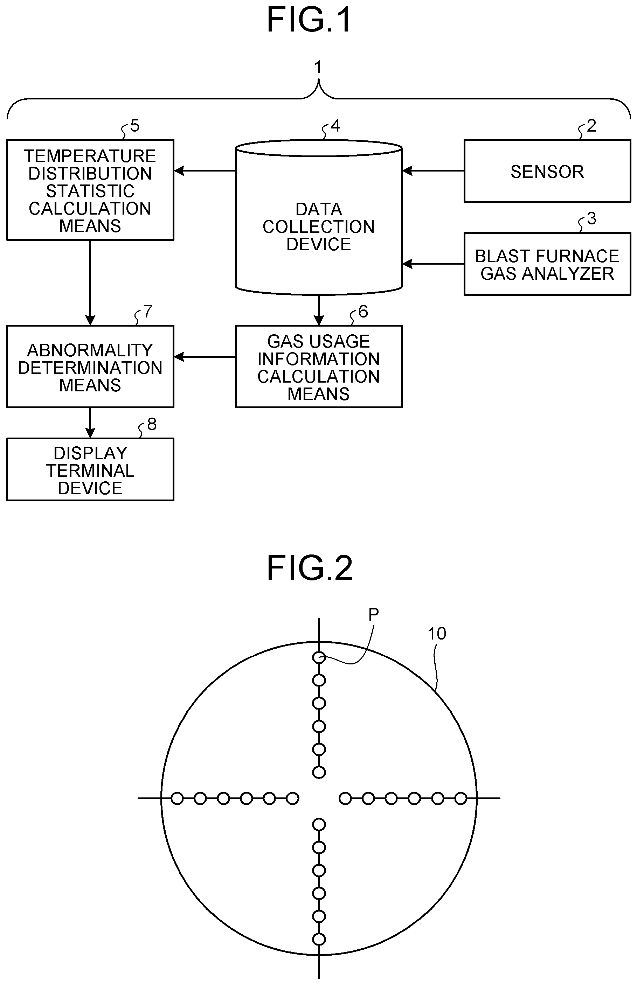

FIG. 1 is a block diagram illustrating a configuration of a blast furnace abnormality determination device according to an embodiment of the present invention. As illustrated in FIG. 1, a blast furnace abnormality determination device 1 according to an embodiment of the present invention includes a sensor 2, a blast furnace gas analyzer 3, a data collection device 4, a temperature distribution statistic calculation means 5, a gas usage information calculation means 6, an abnormality determination means 7, and a display terminal device 8.

The sensor 2 measures a temperature distribution immediately above a raw material (raw material charging surface) charged in a blast furnace, and outputs an electric signal indicating the measured temperature distribution information to the data collection device 4. Note that the sensor 2 may be a thermocouple, but a sensor capable of measuring a temperature at a higher speed, such as a sonic thermometer, may be used. The sensor 2 functions as a temperature distribution measurement unit according to the present invention.

The blast furnace gas analyzer 3 measures a concentration of a gas generated in the blast furnace, and outputs an electric signal indicating a measurement value to the data collection device 4. The blast furnace gas analyzer 3 functions as a gas component analysis unit according to the present invention.

The data collection device 4 accumulates the information output from the sensor 2 and the blast furnace gas analyzer 3, and outputs the accumulated information in response to read requests from the temperature distribution statistic calculation means 5 and the gas usage information calculation means 6. The data collection device 4 functions as a second data acquisition unit, a data accumulation unit, and a data transmission unit according to the present invention.

The temperature distribution statistic calculation means 5 calculates a Q statistic value for determining whether or not the temperature distribution immediately above the raw material charging surface measured by the sensor 2 is normal using a calculation model formula of the Q statistic value, and outputs information regarding the calculated Q statistic value to the abnormality determination means 7. Note that it is assumed that the calculation model formula of the Q statistic value is constructed in advance by principal component analysis based on data obtained in a normal operational state among the past data accumulated in the data collection device 4. Furthermore, in a case where operating conditions of the blast furnace are changed, data in a normal operational state is collected again, and the principal component analysis and construction of the calculation model formula of the Q statistic value may be performed. The concept of the principal component value (Q statistic value and the like) is a general method of multivariate statistical process control (MSPC), and the calculation method and other descriptions are as described in Patent Literature 1 and Non Patent Literature 1. The principal component analysis, the construction of the calculation model formula of the Q statistic value, and the like may be performed by another statistical model development computer, and necessary information may be taken into the abnormality determination device. Furthermore, the necessary information may be acquired by installing a statistical analysis tool in the abnormality determination device and executing the statistical analysis tool in the abnormality determination device.

As the temperature distribution information used for the principal component analysis (Q statistic value calculation), it is conceivable to use not the temperature distribution information of the entire surface of a furnace top of the blast furnace but only the temperature distribution information of an intermediate part excluding the temperature distribution information of the central part and a peripheral part. Even in normal operation, a high temperature portion may appear relatively randomly in the peripheral part, which causes a disturbance. Furthermore, since the absolute temperature of the central part has a large fluctuation range of about 300 to 800°C, this is also considered to be a disturbance. It has been found that these disturbances can be suppressed when the intermediate part is a part of R/4 to 3R/4 (R is a radius of the furnace top of the blast furnace) from the center in the radial direction.

The gas usage information calculation means 6 calculates a gas utilization rate of the operating blast furnace using the concentration of the gas generated in the blast furnace measured by the blast furnace gas analyzer 3. The gas utilization rate can be calculated, for example, by dividing the CO concentration by the CO₂ concentration. Then, the gas usage information calculation means 6 outputs information indicating the calculated gas utilization rate to the abnormality determination means 7. The gas usage information calculation means 6 functions as a gas component analysis unit according to the present invention.

The abnormality determination means 7 monitors a temperature distribution abnormality caused by a reaction such as reduction/temperature rise of the raw material in the blast furnace by associating the Q statistic value calculated by the temperature distribution statistic calculation means 5 with the gas utilization rate calculated by the gas usage information calculation means 6, and determines whether or not an abnormality has occurred in the operating blast furnace. Specifically, the abnormality determination means 7 determines that an abnormality has occurred in the operating blast furnace in a case where the Q statistic value is greater than or equal to a predetermined threshold and the gas utilization rate is greater than or equal to a predetermined threshold. Then, the abnormality determination means 7 outputs information indicating a determination result to the display terminal device 8.

The display terminal device 8 includes an information processing device including a display device such as a liquid crystal display, and presents abnormality determination information including data used for determination by the abnormality determination means 7 and the determination result to an operator. The display terminal device 8 functions as an abnormality determination information acquisition unit and a display unit according to the present invention when an arithmetic processing device in the information processing device executes a computer program. In a case where it is presented that an abnormality has occurred in the blast furnace, the operator takes measures at the time of occurrence of an abnormality such as a decrease in wind of blast furnace blowing. As a result, the abnormality of the blast furnace can be detected early and with high accuracy, and the blast furnace can be operated stably.

Note that, from the viewpoint of evaluating a correlation between the Q statistic value and the gas utilization rate of the blast furnace, the Q statistic value and the gas utilization rate of the blast furnace may be separately subjected to the principal component analysis, and abnormality determination of the blast furnace may be performed based on a result thereof. In this case, since the abnormality determination of the blast furnace is performed in consideration of the correlation between the Q statistic value and the gas utilization rate of the blast furnace, a T² statistic may be used as the statistic. The T² statistic is also known to be a statistic obtained on the basis of the result of the principal component analysis, and is mainly an index for evaluating a magnitude of interlocked changes of a plurality of signals. Similarly to the calculation model formula of the Q statistic value, a calculation model formula of the T² statistic can also be constructed in advance on the basis of data obtained in a normal operational state among the past data accumulated in the data collection device 4. Specifically, the calculation model formula of the T² statistic can be constructed by calculating the Q statistic using the temperature distribution data immediately above the raw material charging surface obtained in the normal operational state and performing the principal component analysis on two data of the Q statistic value and the gas utilization rate data. The principal component analysis, the construction of the calculation model formula of the T² statistic value, and the like may be performed by another statistical model development computer, and necessary information may be taken into the abnormality determination device. Furthermore, the necessary information may be acquired by installing a statistical analysis tool in the abnormality determination device and executing the statistical analysis tool in the abnormality determination device.

As a result, using the Q statistic as a representative index with respect to the change in the temperature distribution immediately above the raw material charging surface, when an amount of change in the Q statistic, which is the degree of abnormality related to the temperature distribution, and an amount of change in the gas utilization rate deteriorate in conjunction with each other, an interlocking relationship between and the amounts of change in the Q statistic and the gas utilization rate can be evaluated with the T² statistic. As described above, the T² statistic is a statistic that can be evaluated by associating the Q statistic calculated based on the principal component analysis from the temperature distribution data immediately above the raw material charging surface with the gas utilization rate which is an index related to the gas utilization of the blast furnace. In a case where the operating conditions of the blast furnace are changed, data in a normal operational state may be collected again, and the calculation model formula of the T² statistic may be constructed by similar calculation. The calculation method and the like are as described in Non Patent Literature 1 and the like. In a case where the abnormality determination of the blast furnace is performed based on the value of the T² statistic, it may be determined that an abnormality has occurred in the blast furnace when the value of the T² statistic exceeds a predetermined abnormality determination threshold. In the monitoring of the T² statistic, it is possible to monitor a case where the Q statistic value based on the temperature distribution data immediately above the raw material charging surface and the gas utilization rate increase in conjunction with each other by the statistical method. Therefore, it is possible to more accurately detect the temperature distribution abnormality immediately above the raw material charging surface, which is supported by the gas utilization rate change, and to more accurately detect the reaction abnormality in the blast furnace.

### [Examples]

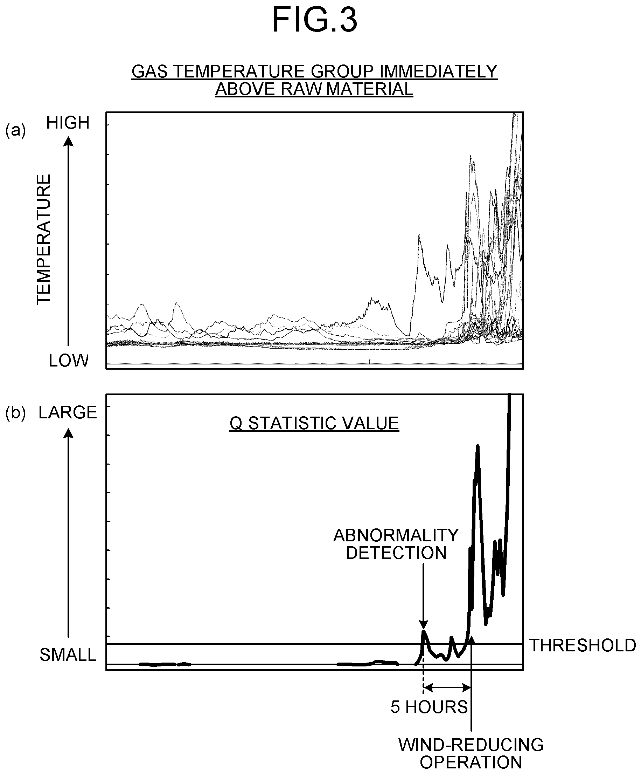

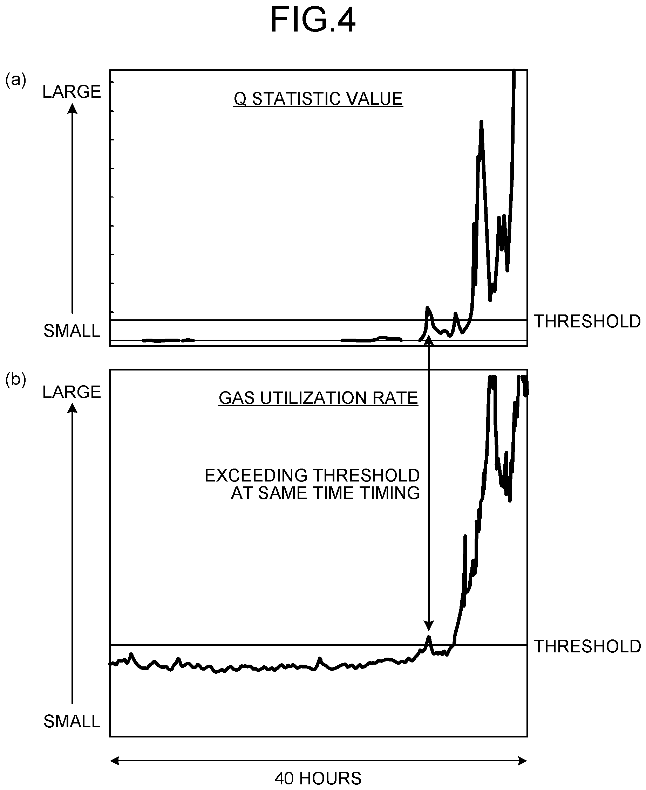

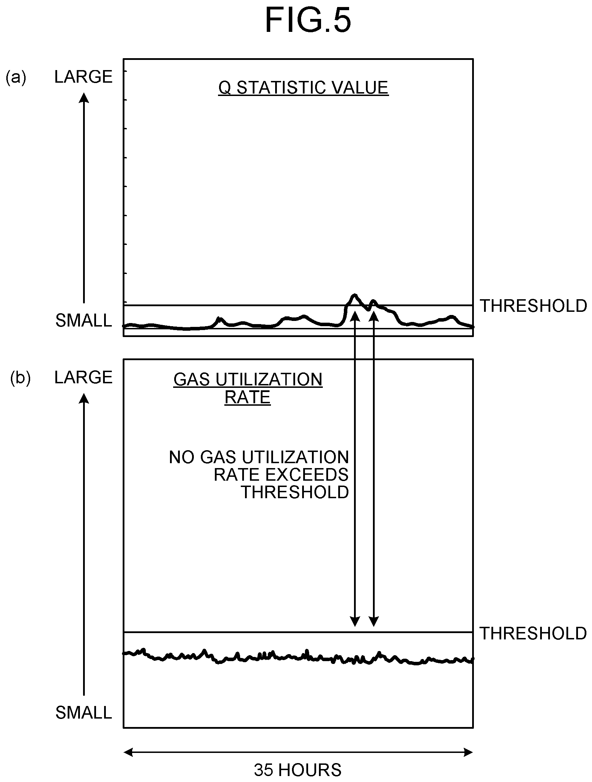

In the present Example, as illustrated in FIG. 2, a temperature immediately above the raw material charging surface was measured at six measurement points P in the radial direction of a furnace body 10 (24 (= 6 × 4) points in total) using a rod-shaped sonde charged from four directions of a furnace throat (furnace top). A result of calculating the Q statistic using the data when the gas flow rate (ratio) in the central part of the blast furnace increased and a trouble occurred is illustrated in FIG. 3. FIG. 3(a) illustrates a temperature group immediately above the raw material charging surface used for calculation of the Q statistic, and FIG. 3(b) illustrates a calculation result of the Q statistic. It can be seen that the Q statistic exceeds a threshold about five hours before the operator senses an abnormality and performs the wind-reducing operation at the timing indicated by an arrow in the drawing. FIG. 4(b) illustrates the gas utilization rate in the same time zone. Note that FIG. 4(a) is the same as FIG. 3(b). As illustrated in FIG. 4(b), it can be seen that the gas utilization rate also increases at substantially the same timing as the Q statistic. For comparison, the Q statistics and the gas utilization rate during relatively stable operation that did not lead to trouble are illustrated in FIGS. 5(a) and 5(b). Note that the same values as those in FIG. 4 are used for the thresholds in the drawing. At this time, the Q statistic increases and exceeds the threshold, but the gas utilization rate does not exceed the threshold. From the above, the usefulness of performing abnormality determination in consideration of not only the Q statistic value but also the value of the gas utilization rate was confirmed.

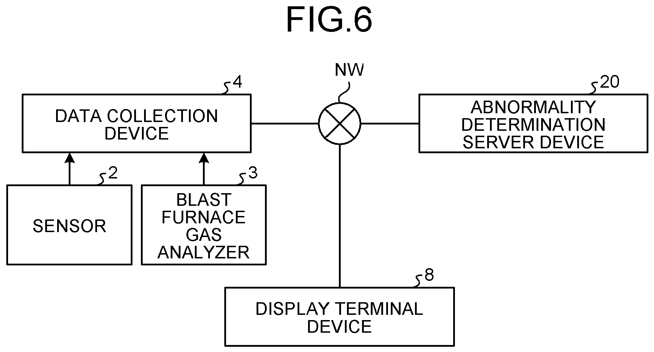

The present invention is defined by the appended claims. For example, as illustrated in FIG. 6, the respective units of the blast furnace abnormality determination device 1 illustrated in FIG. 1 may be dispersedly disposed on an electric communication line NW, and the respective units may perform information communication via the electric communication line NW to implement the function of the blast furnace abnormality determination device 1. Specifically, in the example illustrated in FIG. 6, a client server type blast furnace abnormality determination system is constructed by connecting an abnormality determination server device 20 that acquires the operational data of the blast furnace and determines the abnormality, the data collection device 4 illustrated in FIG. 1, and the display terminal device 8 illustrated in FIG. 1 via the electric communication line NW. The abnormality determination server device 20 is constructed by an information processing device such as a workstation or a cloud computer. The abnormality determination server device 20 functions as the temperature distribution statistic calculation means 5, the gas usage information calculation means 6, and the abnormality determination means 7 illustrated in FIG. 1, a first data acquisition means 20a that acquires, from the data collection device 4, at least the temperature distribution data immediately above the raw material charging surface in the blast furnace and the gas analysis information obtained by analyzing the component of the gas in the blast furnace, and a determination data transmission means 20b that transmits the abnormality determination information including the data used for the determination in the abnormality determination means 7 and the determination result, when an arithmetic processing device in the information processing device executes a computer program. The data collection device 4 functions as a second data acquisition means 4a that acquires at least temperature distribution data immediately above the raw material charging surface in the blast furnace and gas analysis information obtained by analyzing the component of the gas in the blast furnace, a data accumulation means 4b that stores the information acquired by the second data acquisition means 4a, and a data transmission means 4c that transmits data requested in response to requests from the abnormality determination server device 20 and the display terminal device 8. Furthermore, the display terminal device 8 functions as an abnormality determination information acquisition means 8a that acquires abnormality determination information from the abnormality determination server device 20, and a display means 8b that displays the information acquired by the abnormality determination information acquisition means 8a, when an arithmetic processing device in the display terminal device 8 executes a computer program. As described above, other embodiments, examples, operation techniques, and the like made by those skilled in the art based on the present embodiment are all included in the scope of the present appended claims

### Industrial Applicability

According to the present invention, it is possible to provide a blast furnace abnormality determination device, a blast furnace abnormality determination method, a data carrier storing a program of the abnormality determination server device, and a data carrier storing a program of the display terminal device capable of early and accurately detecting an abnormality of a blast furnace. Furthermore, according to the present invention, it is possible to provide a blast furnace operation method capable of stably operating the blast furnace by detecting an abnormality of the blast furnace at an early stage and with high accuracy.

### Reference Signs List

1 BLAST FURNACE ABNORMALITY DETERMINATION DEVICE
2 SENSOR
3 BLAST FURNACE GAS ANALYZER
4 DATA COLLECTION DEVICE
5 TEMPERATURE DISTRIBUTION STATISTIC CALCULATION MEANS
6 GAS USAGE INFORMATION CALCULATION MEANS
7 ABNORMALITY DETERMINATION MEANS
8 DISPLAY TERMINAL DEVICE
10 FURNACE BODY
20 ABNORMALITY DETERMINATION SERVER DEVICE
P MEASUREMENT POINT

## Claims

1. A blast furnace abnormality determination device (1) comprising:
a temperature distribution measurement unit configured to measure a temperature distribution immediately above a raw material charging surface in a blast furnace (10);
a gas component analysis unit configured to analyze a component of a gas in the blast furnace;
a data accumulation unit (4) configured to accumulate information on the temperature distribution measured by the temperature distribution measurement unit and an analysis result of the gas component analysis unit;
a temperature distribution statistic calculation unit (5) configured to calculate a statistic for determining whether or not the temperature distribution measured by the temperature distribution measurement unit is normal based on a result obtained by performing principal component analysis on the information of the temperature distribution of the blast furnace (10) in a normal state accumulated in the data accumulation unit (4); and
an abnormality determination unit (7) configured to determine whether or not an abnormality has occurred in the blast furnace (10) by evaluating the statistic calculated by the temperature distribution statistic calculation unit (5) and the analysis result of the gas component analysis unit in association with each other,
wherein the analysis result of the gas component analysis unit includes information regarding a gas utilization rate, and
the abnormality determination unit (7) is configured to determine whether or not an abnormality has occurred in the blast furnace (10) by statistically evaluating interlocked changes and amounts of changes in the Q statistic calculated by the temperature distribution statistic calculation unit (5) and the gas utilization rate.

2. The blast furnace abnormality determination device according to claim 1, wherein the analysis result of the gas component analysis unit includes information regarding a concentration of the gas in the blast furnace (10).

3. A blast furnace abnormality determination method comprising:
a temperature distribution measurement step of measuring a temperature distribution immediately above a raw material charging surface in a blast furnace (10);
a gas component analysis step of analyzing a component of a gas in the blast furnace (10);
a data accumulation step of accumulating information on the temperature distribution measured in the temperature distribution measurement step and an analysis result in the gas component analysis step;
a temperature distribution statistic calculation step of calculating a statistic for determining whether or not the temperature distribution measured in the temperature distribution measurement step is normal based on a result obtained by performing principal component analysis on the information of the temperature distribution of the blast furnace (10) in a normal state accumulated in the data accumulation step; and
an abnormality determination step of determining whether or not an abnormality has occurred in the blast furnace (10) by evaluating the statistic calculated in the temperature distribution statistic calculation step and the analysis result in the gas component analysis step in association with each other,
wherein the analysis result in the gas component analysis step includes information regarding a gas utilization rate, and
the abnormality determination step includes a step of determining whether or not an abnormality has occurred in the blast furnace (10) by statistically evaluating interlocked changes and amounts of changes in the Q statistic calculated in the temperature distribution statistic calculation step and the gas utilization rate.

4. The blast furnace abnormality determination method according to claim 3, wherein the analysis result in the gas component analysis step includes information regarding a concentration of the gas in the blast furnace (10).

5. A blast furnace operation method comprising a step of operating a blast furnace (10) using the blast furnace abnormality determination device (1) according to any one of claims 1 or 2.

6. A data carrier storing a program for an abnormality determination server device for constructing a blast furnace abnormality determination system together with a data collection device (4) for acquiring and accumulating observation data from a sensor (2) and an analyzer (3) installed in a blast furnace (10) and a display terminal device (8) for acquiring and displaying abnormality determination information from the abnormality determination server device (20), the program causing a computer to function as:
a first data acquisition unit configured to acquire, from the data collection device (4), at least temperature distribution data immediately above a raw material charging surface in the blast furnace (10) and gas analysis information obtained by analyzing a component of a gas in the blast furnace (10);
a temperature distribution statistic calculation unit (5) configured to calculate a statistic for determining whether or not the temperature distribution data acquired by the first data acquisition unit is normal based on a result obtained by performing principal component analysis on the temperature distribution data of the blast furnace (10) in a normal state accumulated in the data collection device (4);
an abnormality determination unit (7) configured to determine whether or not an abnormality has occurred in the blast furnace (10) by evaluating the statistic calculated by the temperature distribution statistic calculation unit (5) and the gas analysis information in association with each other; and
a determination data transmission unit configured to transmit abnormality determination information including data used for determination in the abnormality determination unit and a determination result,
wherein the analysis result of the gas component analysis unit includes information regarding a gas utilization rate, and
the abnormality determination unit (7) is configured to determine whether or not an abnormality has occurred in the blast furnace (10) by statistically evaluating interlocked changes and amounts of changes in the Q statistic calculated by the temperature distribution statistic calculation unit (5) and the gas utilization rate.

7. A data carrier storing a program for a display terminal device (8) for acquiring and displaying information related to an abnormality of a blast furnace (10) from an abnormality determination server device (20) for acquiring operation data of the blast furnace (10) and determining whether or not an abnormality has occurred in the blast furnace (10), the program causing a computer to function as:
an abnormality determination information acquisition unit configured to acquire, from the abnormality determination server device (20), abnormality determination information including data used for determining whether or not an abnormality has occurred in the blast furnace (10) and a determination result by evaluating a statistic for determining whether or not temperature distribution data immediately above a raw material charging surface in the blast furnace (10) is normal in association with gas analysis information obtained by analyzing a component of a gas in the blast furnace (10); and
a display unit configured to display information acquired by the abnormality determination information acquisition unit,
wherein the analysis result of the gas component analysis unit includes information regarding a gas utilization rate, and
it is determined whether or not an abnormality has occurred in the blast furnace (10) by statistically evaluating interlocked changes and amounts of changes in the Q statistic calculated by a temperature distribution statistic calculation unit (5) and the gas utilization rate.

## Patentansprüche

1. Vorrichtung zur Bestimmung einer Hochofenabnormalität (1), umfassend:
eine Temperaturverteilungsmessungseinheit, die dazu konfiguriert ist, eine Temperaturverteilung unmittelbar über einer Rohmaterialaufladefläche in einem Hochofen (10) zu messen;
eine Gaskomponentenanalyseeinheit, die dazu konfiguriert ist, eine Komponente eines Gases im Hochofen zu analysieren;
eine Datensammeleinheit (4), die dazu konfiguriert ist, Informationen über die von der Temperaturverteilungsmessungseinheit gemessene Temperaturverteilung und ein Analyseergebnis der Gaskomponentenanalyseeinheit zu sammeln;
eine Temperaturverteilungsstatistikberechnungseinheit (5), die dazu konfiguriert ist, eine Statistik zu berechnen, um zu bestimmen, ob die von der Temperaturverteilungsmessungseinheit gemessene Temperaturverteilung normal ist oder nicht, basierend auf einem Ergebnis, das durch Durchführen einer Hauptkomponentenanalyse an den Informationen der Temperaturverteilung des Hochofens (10) in einem normalen Zustand, die in der Datensammeleinheit (4) gesammelt wurden, erhalten wird; und
eine Abnormalitätsbestimmungseinheit (7), die dazu konfiguriert ist, zu bestimmen, ob eine Abnormalität im Hochofen (10) aufgetreten ist, indem sie die von der Temperaturverteilungsstatistikberechnungseinheit (5) berechnete Statistik und das Analyseergebnis der Gaskomponentenanalyseeinheit gemeinsam auswertet,
wobei das Analyseergebnis der Gaskomponentenanalyseeinheit Informationen über eine Gasnutzungsrate einschließt, und
die Abnormalitätsbestimmungseinheit (7) dazu konfiguriert ist, zu bestimmen, ob eine Abnormalität im Hochofen (10) aufgetreten ist oder nicht, indem sie verknüpfte Änderungen und Mengen von Änderungen in der von der Temperaturverteilungsstatistikberechnungseinheit (5) berechneten Q-Statistik und der Gasnutzungsrate statistisch auswertet.

2. Vorrichtung zur Bestimmung einer Hochofenabnormalität nach Anspruch 1, wobei das Analyseergebnis der Gaskomponentenanalyseeinheit Informationen über eine Konzentration des Gases im Hochofen (10) einschließt.

3. Verfahren zur Bestimmung einer Hochofenabnormalität, umfassend:
einen Temperaturverteilungsmessschritt, bei dem eine Temperaturverteilung unmittelbar über einer Rohmaterialaufladefläche in einem Hochofen (10) gemessen wird;
einen Gaskomponentenanalyseschritt, bei dem eine Komponente eines Gases im Hochofen (10) analysiert wird;
einen Datensammelschritt, bei dem Informationen über die im Temperaturverteilungsmessschritt gemessene Temperaturverteilung und ein Analyseergebnis im Gaskomponentenanalyseschritt gesammelt werden;
einen Temperaturverteilungsstatistikberechnungsschritt, bei dem eine Statistik berechnet wird, um zu bestimmen, ob die im Temperaturverteilungsmessschritt gemessene Temperaturverteilung normal ist oder nicht, basierend auf einem Ergebnis, das durch Durchführen einer Hauptkomponentenanalyse an den Informationen der Temperaturverteilung des Hochofens (10) in einem normalen Zustand, die im Datensammelschritt gesammelt wurden, erhalten wird; und
einen Abnormalitätsbestimmungsschritt, bei dem bestimmt wird, ob eine Abnormalität im Hochofen (10) aufgetreten ist oder nicht, indem die im Temperaturverteilungsstatistikberechnungsschritt berechnete Statistik und das Analyseergebnis im Gaskomponentenanalyseschritt gemeinsam ausgewertet werden,
wobei das Analyseergebnis im Gaskomponentenanalyseschritt Informationen über eine Gasnutzungsrate einschließt, und
der Abnormalitätsbestimmungsschritt einen Schritt einschließt, bei dem bestimmt wird, ob eine Abnormalität im Hochofen (10) aufgetreten ist oder nicht, indem verknüpfte Änderungen und Mengen von Änderungen in der im Temperaturverteilungsstatistikberechnungsschritt berechneten Q-Statistik und der Gasnutzungsrate statistisch ausgewertet werden.

4. Verfahren zur Bestimmung einer Hochofenabnormalität nach Anspruch 3, wobei das Analyseergebnis im Gaskomponentenanalyseschritt Informationen über eine Konzentration des Gases im Hochofen (10) einschließt.

5. Verfahren zum Betrieb eines Hochofens, umfassend einen Schritt, bei dem ein Hochofen (10) unter Verwendung der Vorrichtung zur Bestimmung einer Hochofenabnormalität (1) nach einem der Ansprüche 1 oder 2 betrieben wird.

6. Datenträger, der ein Programm für eine Abnormalitätsbestimmungsservervorrichtung speichert, um ein System zur Bestimmung einer Hochofenabnormalität zusammen mit einer Datenerfassungsvorrichtung (4) zu konstruieren, um Beobachtungsdaten von einem Sensor (2) und einem Analysator (3), die in einem Hochofen (10) installiert sind, zu erfassen und zu sammeln, und eine Anzeigeendgerät (8) zum Erfassen und Anzeigen von Abnormalitätsbestimmungsinformationen von der Abnormalitätsbestimmungsservervorrichtung (20), wobei das Programm einen Computer dazu veranlasst, als Folgendes zu fungieren:
eine erste Datenerfassungseinheit, die dazu konfiguriert ist, von der Datenerfassungsvorrichtung (4) mindestens Temperaturverteilungsdaten unmittelbar über einer Rohmaterialaufladefläche im Hochofen (10) und Gasanalyseinformationen, die durch Analysieren einer Komponente eines Gases im Hochofen (10) erhalten werden, zu erfassen;
eine Temperaturverteilungsstatistikberechnungseinheit (5), die dazu konfiguriert ist, eine Statistik zu berechnen, um zu bestimmen, ob die von der ersten Datenerfassungseinheit erfassten Temperaturverteilungsdaten normal sind, basierend auf einem Ergebnis, das durch Durchführen einer Hauptkomponentenanalyse an den Temperaturverteilungsdaten des Hochofens (10) in einem normalen Zustand, die in der Datensammelvorrichtung (4) gesammelt wurden, erhalten wird;
eine Abnormalitätsbestimmungseinheit (7), die dazu konfiguriert ist, zu bestimmen, ob eine Abnormalität im Hochofen (10) aufgetreten ist oder nicht, indem sie die von der Temperaturverteilungsstatistikberechnungseinheit (5) berechnete Statistik und die Gasanalyseinformationen gemeinsam auswertet; und
eine Bestimmungsdatenübertragungseinheit, die dazu konfiguriert ist, Abnormalitätsbestimmungsinformationen zu übertragen, einschließlich der in der Abnormalitätsbestimmungseinheit verwendeten Daten zur Bestimmung und eines Bestimmungsergebnisses,
wobei das Analyseergebnis der Gaskomponentenanalyseeinheit Informationen über eine Gasnutzungsrate einschließt, und
die Abnormalitätsbestimmungseinheit (7) dazu konfiguriert ist, zu bestimmen, ob eine Abnormalität im Hochofen (10) aufgetreten ist oder nicht, indem sie verknüpfte Änderungen und Mengen von Änderungen in der von der Temperaturverteilungsstatistikberechnungseinheit (5) berechneten Q-Statistik und der Gasnutzungsrate statistisch auswertet.

7. Datenträger, der ein Programm für ein Anzeigeendgerät (8) speichert, um Informationen im Zusammenhang mit einer Abnormalität eines Hochofens (10) von einer Abnormalitätsbestimmungsservervorrichtung (20) zu erfassen und anzuzeigen, um Betriebsdaten des Hochofens (10) zu erfassen und zu bestimmen, ob eine Abnormalität im Hochofen (10) aufgetreten ist oder nicht, wobei das Programm einen Computer dazu veranlasst, als Folgendes zu fungieren:
eine Abnormalitätsbestimmungsinformationserfassungseinheit, die dazu konfiguriert ist, von der Abnormalitätsbestimmungsservervorrichtung (20) Abnormalitätsbestimmungsinformationen zu erfassen, einschließlich der Daten, die zur Bestimmung, ob eine Abnormalität im Hochofen (10) aufgetreten ist oder nicht, verwendet werden, und eines Bestimmungsergebnisses durch Auswerten einer Statistik zur Bestimmung, ob die Temperaturverteilungsdaten unmittelbar über einer Rohmaterialaufladefläche im Hochofen (10) normal sind oder nicht, in Verbindung mit Gasanalyseinformationen, die durch Analyse einer Komponente eines Gases im Hochofen (10) erhalten werden; und
eine Anzeigeeinheit, die dazu konfiguriert ist, Informationen anzuzeigen, die von der Abnormalitätsbestimmungsinformationserfassungseinheit erfasst werden,
wobei das Analyseergebnis der Gaskomponentenanalyseeinheit Informationen über eine Gasnutzungsrate einschließt, und
bestimmt wird, ob eine Abnormalität im Hochofen (10) aufgetreten ist oder nicht, indem verknüpfte Änderungen und Mengen von Änderungen in der von einer Temperaturverteilungsstatistikberechnungseinheit (5) berechneten Q-Statistik und der Gasnutzungsrate statistisch ausgewertet werden.

## Revendications

1. Dispositif (1) de détermination d'anomalie de haut-fourneau comprenant :
un moyen de mesure de distribution de température configuré pour mesurer une distribution de température immédiatement au-dessus d'une surface de charge de matière première dans un haut-fourneau (10) ;
un moyen d'analyse de constituant gazeux configuré pour analyser un constituant d'un gaz dans le haut-fourneau ;
un moyen (4) d'accumulation de données configuré pour accumuler des informations sur la distribution de température mesurée par le moyen de mesure de distribution de température et un résultat d'analyse du moyen d'analyse de constituant gazeux ;
un moyen (5) de calcul statistique de distribution de température configuré pour calculer une statistique pour déterminer si la distribution de température mesurée par le moyen de mesure de distribution de température est normale ou non sur la base d'un résultat obtenu en réalisant une analyse de constituant principal sur les informations de la distribution de température du haut-fourneau (10) dans un état normal accumulées dans le moyen (4) d'accumulation de données ; et
un moyen (7) de détermination d'anomalie configuré pour déterminer si une anomalie s'est produite ou non dans le haut-fourneau (10) en évaluant les statistiques calculées par le moyen (5) de calcul statistique de distribution de température et le résultat d'analyse du moyen d'analyse de constituant gazeux en association les unes avec les autres,
dans lequel le résultat d'analyse du moyen d'analyse de constituant gazeux inclut des informations concernant un taux d'utilisation de gaz, et
le moyen (7) de détermination d'anomalie est configuré pour déterminer si une anomalie s'est produite ou non dans le haut-fourneau (10) en évaluant statistiquement les changements verrouillés et les quantités de changements dans la statistique Q calculée par le moyen (5) de calcul statistique de distribution de température et le taux d'utilisation de gaz.

2. Dispositif de détermination d'anomalie de haut-fourneau selon la revendication 1, dans lequel le résultat d'analyse du moyen d'analyse de constituant gazeux inclut des informations concernant une concentration du gaz dans le haut-fourneau (10).

3. Procédé de détermination d'anomalie de haut-fourneau comprenant :
une étape de mesure de distribution de température consistant à mesurer une distribution de température immédiatement au-dessus d'une surface de charge de matière première dans un haut-fourneau (10) ;
une étape d'analyse de constituant gazeux d'analyse d'un constituant d'un gaz dans le haut-fourneau (10) ;
une étape d'accumulation de données d'accumulation d'informations sur la distribution de température mesurée dans l'étape de mesure de distribution de température et un résultat d'analyse dans l'étape d'analyse de constituant gazeux ;
une étape de calcul statistique de distribution de température de calcul d'une statistique pour déterminer si la distribution de température mesurée dans l'étape de mesure de distribution de température est normale ou non sur la base d'un résultat obtenu en réalisant une analyse de constituant principal sur les informations de la distribution de température du haut-fourneau (10) dans un état normal accumulées dans l'étape d'accumulation de données ; et
une étape de détermination d'anomalie consistant à déterminer si une anomalie s'est produite ou non dans le haut-fourneau (10) en évaluant les statistiques calculées dans l'étape de calcul des statistiques de distribution de température et le résultat d'analyse dans l'étape d'analyse des constituants gazeux en association les unes avec les autres,
dans lequel le résultat d'analyse dans l'étape d'analyse de constituant gazeux inclut des informations concernant un taux d'utilisation de gaz, et
l'étape de détermination d'anomalie inclut une étape de détermination si une anomalie s'est produite ou non dans le haut-fourneau (10) en évaluant statistiquement les changements verrouillés et les quantités de changements dans la statistique Q calculée dans l'étape de calcul statistique de distribution de température et le taux d'utilisation de gaz.

4. Procédé de détermination d'anomalie de haut-fourneau selon la revendication 3, dans lequel le résultat d'analyse dans l'étape d'analyse de constituant gazeux inclut des informations concernant une concentration du gaz dans le haut-fourneau (10).

5. Procédé de fonctionnement de haut-fourneau comprenant une étape de fonctionnement d'un haut-fourneau (10) à l'aide du dispositif (1) de détermination d'anomalie de haut-fourneau selon l'une quelconque de la revendication 1 ou la revendication 2.

6. Support de données stockant un programme pour un dispositif serveur de détermination d'anomalie pour construire un système de détermination d'anomalie de haut-fourneau conjointement avec un dispositif (4) de collecte de données pour acquérir et accumuler des données d'observation à partir d'un capteur (2) et d'un analyseur (3) installé dans un haut-fourneau (10) et un dispositif (8) terminal d'affichage pour acquérir et afficher des informations de détermination d'anomalie à partir du dispositif (20) serveur de détermination d'anomalie, le programme amenant un ordinateur à fonctionner comme :
un premier moyen d'acquisition de données configuré pour acquérir, à partir du dispositif (4) de collecte de données, au moins des données de distribution de température immédiatement au-dessus d'une surface de charge de matière première dans le haut-fourneau (10) et des informations d'analyse de gaz obtenues par analyse d'un constituant d'un gaz dans le haut-fourneau (10) ;
un moyen (5) de calcul statistique de distribution de température configuré pour calculer une statistique pour déterminer si les données de distribution de température acquises par le premier moyen d'acquisition de données sont normales ou non sur la base d'un résultat obtenu en réalisant une analyse de constituant principal sur les données de distribution de température du haut-fourneau (10) dans un état normal accumulé dans le dispositif (4) de collecte de données ;
un moyen (7) de détermination d'anomalie configuré pour déterminer si une anomalie s'est produite ou non dans le haut-fourneau (10) en évaluant les statistiques calculées par le moyen (5) de calcul statistique de distribution de température et les informations d'analyse de gaz en association les unes avec les autres ; et
un moyen de transmission de données de détermination configuré pour transmettre des informations de détermination d'anomalie incluant les données utilisées pour la détermination dans le moyen de détermination d'anomalie et un résultat de détermination,
dans lequel le résultat d'analyse du moyen d'analyse de constituant gazeux inclut des informations concernant un taux d'utilisation de gaz, et
le moyen (7) de détermination d'anomalie est configuré pour déterminer si une anomalie s'est produite ou non dans le haut-fourneau (10) en évaluant statistiquement les changements verrouillés et les quantités de changements dans la statistique Q calculée par le moyen (5) de calcul statistique de distribution de température et le taux d'utilisation de gaz.

7. Support de données stockant un programme pour un dispositif (8) terminal d'affichage pour acquérir et afficher des informations relatives à une anomalie d'un haut-fourneau (10) à partir d'un dispositif (20) serveur de détermination d'anomalies pour acquérir des données de fonctionnement du haut-fourneau (10) et déterminer si une anomalie s'est produite ou non dans le haut-fourneau (10), le programme amenant un ordinateur à fonctionner comme :
un moyen d'acquisition d'informations de détermination d'anomalie configuré pour acquérir, à partir du dispositif (20) serveur de détermination d'anomalie, des informations de détermination d'anomalie incluant les données utilisées pour déterminer si une anomalie s'est produite ou non dans le haut-fourneau (10) et un résultat de détermination par évaluation d'une statistique pour déterminer si les données de distribution de température immédiatement au-dessus d'une surface de charge de matière première dans le haut-fourneau (10) sont normales en association avec des informations d'analyse de gaz obtenues par analyse d'un constituant d'un gaz dans le haut-fourneau (10) ; et
un moyen d'affichage configuré pour afficher des informations acquises par le moyen d'acquisition d'informations de détermination d'anomalie,
dans lequel le résultat d'analyse du moyen d'analyse de constituant gazeux inclut des informations concernant un taux d'utilisation de gaz, et
on détermine si une anomalie s'est produite ou non dans le haut-fourneau (10) en évaluant statistiquement les changements interverrouillés et les quantités de changements dans la statistique Q calculée par un moyen (5) de calcul statistique de distribution de température et le taux d'utilisation de gaz.
